# EUROPEAN PATENT APPLICATION

(11) **EP 4 528 480 A1**
(43) Date of publication of application: **26.03.2025**
(21) Application number: 23870292.2
(22) Date of filing: 11.09.2023
(51) Int. Cl.: G06F 8/61

(54) **APPLICATION PROGRAM INSTALLATION METHOD AND ELECTRONIC DEVICE**

(30) Priority: 28.09.2022 CN 202211194032
(71) Applicant: Huawei Technologies Co., Ltd., Shenzhen, Guangdong 518129 (CN)
(72) Inventor: TE, Rigele, Shenzhen, Guangdong 518129 (CN); LI, Weisheng, Shenzhen, Guangdong 518129 (CN); HE, Mingshan, Shenzhen, Guangdong 518129 (CN)
(74) Representative: Körber, Martin Hans
(86) International application number: PCT/CN2023/118089
(87) International publication number: WO 2024/067053

(57) **Abstract**

This application provides an application installation method and an electronic device. The method includes: An electronic device receives an installation request of a user. In response to the installation request, the electronic device downloads an installation package file of the application and stores the installation package file of the application in a shared folder. The shared folder supports access by a package manager service PMS service with read/write permission. The electronic device invokes the PMS service to obtain an address of the shared folder corresponding to the application, obtains the shared folder based on the address of the shared folder, and further installs the application based on the installation package file in the shared folder. In this way, the electronic device can obtain, based on the address of the shared folder, the installation package file stored in the shared folder. In a process of installing the application, the electronic device does not need to copy the installation package file for a plurality of times, so that a speed of installing the application can be improved, and time for installing the application can be reduced. Therefore, user experience is improved.

## Description

This application claims priority to Chinese Patent Application No. 202211194032.0, filed with the China National Intellectual Property Administration on September 28, 2022 and entitled "APPLICATION INSTALLATION METHOD AND ELECTRONIC DEVICE", which is incorporated herein by reference in its entirety.

### TECHNICAL FIELD

This application relates to the field of terminal technologies, and in particular, to an application installation method and an electronic device.

### BACKGROUND

With wide application of electronic devices in life, a user may install, on the electronic device, applications that can implement different functions, to meet a use requirement of the user. For example, the user may install a game application on the electronic device, to meet an entertainment and relaxation requirement of the user by using the game application. The user may install a learning application on the electronic device, to meet a learning requirement of the user by using the learning application.

To continuously enrich use functions and experience of an application, developers may continuously add a plurality of new functions and features to the application. As a result, a data amount of an installation package file of the application is increasingly large, and consequently, time for installing the application on the electronic device is increasingly long. This affects user experience. Therefore, how to quickly install an application on an electronic device becomes an urgent problem to be resolved.

### SUMMARY

Embodiments of this application provide an application installation method and an electronic device. In the method, an installation package file of an application can be downloaded to a shared folder by using the electronic device, and the electronic device may invoke a PMS service to install the application based on the installation package file in the shared folder. In this way, in a process of installing the application, the electronic device does not need to copy the installation package file for a plurality of times. This improves a problem that time for installing an application on an electronic device is relatively long, and improves user experience.

To achieve the foregoing objectives, the following technical solutions are used in embodiments of this application.

According to a first aspect, an application installation method is provided. The method includes: An electronic device receives an installation request of a user. In response to the installation request, the electronic device downloads an installation package file of the application and stores the installation package file of the application in a shared folder. The shared folder supports access by a package manager service PMS service with read/write permission. The electronic device invokes the PMS service to obtain an address of the shared folder corresponding to the application, obtains the shared folder based on the address of the shared folder, and further installs the application based on the installation package file in the shared folder. In this way, the electronic device can obtain, based on the address of the shared folder, the installation package file stored in the shared folder. In a process of installing the application, the electronic device does not need to copy the installation package file for a plurality of times, so that a speed of installing the application can be improved, and time for installing the application can be reduced. Therefore, user experience is improved.

In an implementation of the first aspect, that the electronic device invokes the PMS service to obtain an address of the shared folder corresponding to the application includes that the electronic device invokes the PMS service, and obtains a session parameter SessionParams from a package installer service PIS service by using a package installer session PackageInstallerSession corresponding to the application. The SessionParams includes the address of the shared folder. In this implementation, the electronic device may transfer the address of the shared folder to the PMS service based on the SessionParams by invoking the PIS service, so that the PMS service can extract the address of the shared folder based on the SessionParams, to further install the application based on the installation package file in the shared folder. Therefore, the speed of installing the application is improved.

In an implementation of the first aspect, the method further includes that the electronic device invokes the PIS service to create the PackageInstallerSession. The PackageInstallerSession is used to transmit the session parameter SessionParams corresponding to the application. In this implementation, the electronic device may transmit the address of the shared folder by using the PackageInstallerSession, so that the electronic device obtains the shared folder based on the address of the shared folder. In this way, the electronic device can install the application based on the installation package file in the shared folder without copying the installation package file. Therefore, the speed of installing the application is improved.

In an implementation of the first aspect, that the electronic device invokes the package installer service PIS service to create the PackageInstallerSession includes that the electronic device invokes the PIS service to obtain the session parameter SessionParams corresponding to the application, and creates the PackageInstallerSession based on the session parameter SessionParams. In this implementation, the PIS service creates the PackageInstallerSession based on the session parameter SessionParams that includes the address of the shared folder, to transmit the address of the shared folder by using the PackageInstallerSession. In this way, the electronic device does not need to copy the installation package file. Therefore, the speed of installing the application is improved.

In an implementation of the first aspect, a method in which the electronic device installs the application based on the installation package file in the shared folder includes that the electronic device invokes an installation daemon Installd to rename the shared file as an installation folder of the application. The electronic device invokes the PMS service to install the application by using the installation package file in the installation folder. In this implementation, the electronic device may rename the shared file as the installation folder of the application by invoking the installation daemon Installd. In this way, the PMS service can install the application by using the installation package file in the installation folder.

According to a second aspect, an electronic device is provided, including: a receiving module, configured to receive an installation request of a user, where the installation request is used to request to install an application; and a processing module, configured to: in response to the installation request, download an installation package file of the application and store the installation package file of the application in a shared folder. The shared folder supports access by a package manager service PMS service with read/write permission. The processing module is further configured to: invoke the PMS service to obtain an address of the shared folder corresponding to the application, obtain the shared folder based on the address of the shared folder, and install the application based on the installation package file in the shared folder. The address of the shared folder indicates the shared folder in which the installation package file of the application is located. In this way, the electronic device can obtain, based on the address of the shared folder, the installation package file stored in the shared folder. In a process of installing the application, the electronic device does not need to copy the installation package file for a plurality of times, so that a speed of installing the application can be improved, and time for installing the application can be reduced. Therefore, user experience is improved.

In an implementation of the second aspect, the processing module is specifically configured to: invoke the PMS service, and obtain a session parameter SessionParams from a package installer service PIS service by using a package installer session PackageInstallerSession corresponding to the application. The SessionParams includes the address of the shared folder.

In an implementation of the second aspect, the processing module is further configured to invoke the PIS service to create the PackageInstallerSession. The PackageInstallerSession is used to transmit the session parameter SessionParams corresponding to the application.

In an implementation of the second aspect, the processing module is specifically configured to: invoke the PIS service to obtain the session parameter SessionParams corresponding to the application and create the PackageInstallerSession based on the session parameter SessionParams.

In an implementation of the second aspect, the processing module is further configured to: invoke an Installd process to rename the shared file as an installation folder of the application, and further invoke the PMS service to install the application by using the installation package file in the installation folder.

According to a third aspect, a computer-readable storage medium is provided, including computer instructions. When the computer instructions are run on an electronic device, the electronic device is enabled to perform the method according to any one of the first aspect.

According to a fourth aspect, a computer program product is provided. When the computer program product runs on a computer, the electronic device is enabled to perform the method according to any one of the first aspect.

It may be understood that for beneficial effects that can be achieved by the electronic device in the second aspect, the computer-readable storage medium in the third aspect, and the computer program product in the fourth aspect, refer to beneficial effects in any one of the first aspect and the possible designs of the first aspect. Details are not described herein again.

### BRIEF DESCRIPTION OF DRAWINGS

FIG. 1 is a schematic flowchart of a method for installing an application on an electronic device according to an embodiment of this application;
FIG. 2 is a principle diagram of installing an application on an electronic device according to an embodiment of this application;
FIG. 3 is a diagram of an application download interface according to an embodiment of this application;
FIG. 4 is a diagram of a hardware structure of an electronic device according to an embodiment of this application;
FIG. 5 is a diagram of a software structure of an electronic device according to an embodiment of this application;
FIG. 6A and FIG. 6B are schematic flowcharts of an application installation method according to an embodiment of this application;
FIG. 7 is a principle diagram of an application installation method according to an embodiment of this application;
FIG. 8 is a diagram of initiating an installation request to an electronic device according to an embodiment of this application;
FIG. 9 is a schematic flowchart of installing an application by a PMS service according to an embodiment of this application; and
FIG. 10 is a diagram of a structure of an electronic device according to an embodiment of this application.

### DESCRIPTION OF EMBODIMENTS

The following describes the technical solutions in embodiments of this application with reference to accompanying drawings in embodiments of this application. In descriptions of this application, unless otherwise specified, "/" indicates an "or" relationship between associated objects. For example, A/B may indicate A or B. In this application, "and/or" describes only an association relationship between associated objects and indicates that three relationships may exist. For example, A and/or B may indicate the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

To help a person skilled in the art understand the technical solutions in embodiments of this application, the following first explains and describes technical terms in embodiments of this application.

Package manager service (PackageManagerService, PMS): The PMS service is one of core services in an Android (Android) system, and provides a management service related to a package (package) (or referred to as an installation package/a software package of an application). For example, the PMS service may provide, based on an installation package of an application, services such as installation, uninstallation, and information management of the application. The PMS service runs in a system service (SystemServer) process. The SystemServer process is a process actively created by the Android system during startup.

Package installer service (PackageInstallerService, PIS): The PIS service is an application installation service in an Android system. The PIS service may provide interfaces for application installation, uninstallation, and the like.

With wide application of electronic devices in life, a user may install, on the electronic device, applications that can implement different functions, to meet a use requirement of the user. For example, the user may install a game application on the electronic device, to meet an entertainment and relaxation requirement of the user by using the game application. The user may install a learning application on the electronic device, to meet a learning requirement of the user by using the learning application.

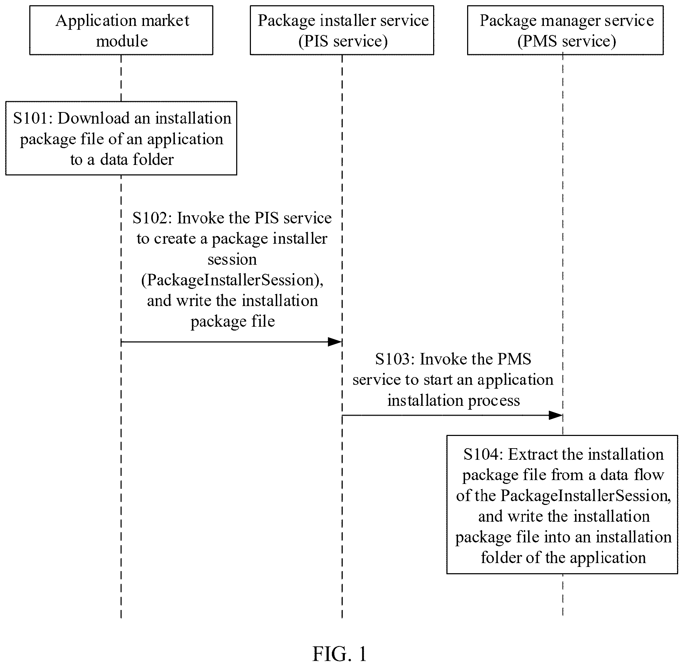

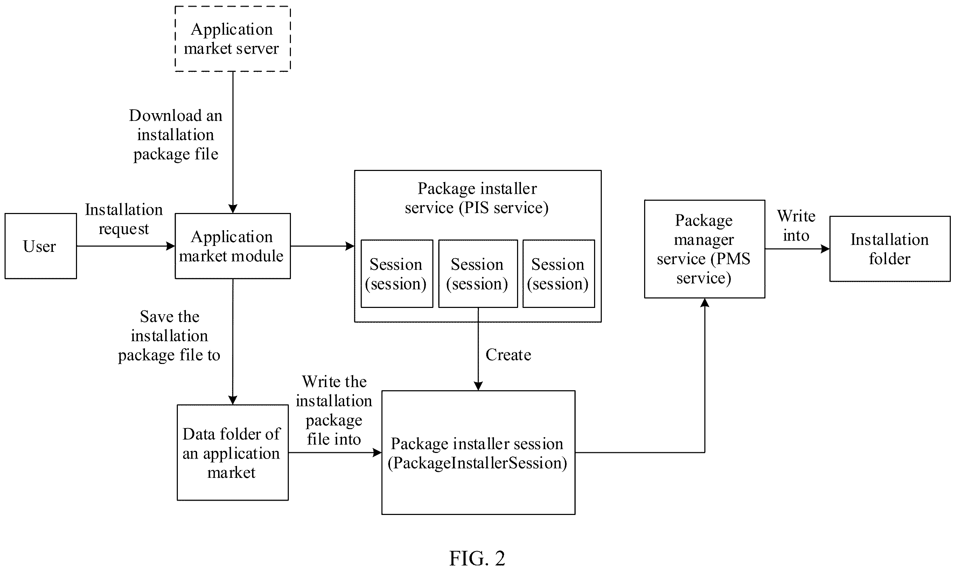

FIG. 1 is a schematic flowchart of a method for installing an application on an electronic device according to an embodiment of this application. FIG. 2 is a principle diagram of installing an application on an electronic device according to an embodiment of this application. With reference to FIG. 1 and FIG. 2, an example in which the electronic device downloads and installs the application by using an application market module deployed on the electronic device is used to describe an example of the method for installing the application on the electronic device. The method may be implemented through the following steps S101 to S104.

S101: In response to a download request of a user for downloading the application from an application market, the application market module of the electronic device downloads an installation package file of the application to a data folder.

The installation package file of the application may be also referred to as an installation package of the application, a software package of the application, an installation file of the application, or the like. The data folder is a data folder of the application market module. In other words, the installation package file is stored in the data folder of the application market module. For example, an address of the data folder is /data/data/com.xxxxxx.appmarket/files/. The data folder of the application market module is located at an application layer of the electronic device and may be accessed by the application market module, and the installation package file of the application may be read or written from the data folder. However, another functional module (such as a PMS service) in an operating system of the electronic device cannot directly access the installation package file from the data folder.

S102: The electronic device invokes a PIS service to create a package installer session (PackageInstallerSession), and transfers the installation package file to the PMS service by using the PackageInstallerSession.

Specifically, the electronic device invokes the PIS service to copy the installation package file in the data folder of the application market module to a temporary data folder transmitted by using the PackageInstallerSession, and provides the PMS service with an interface for accessing the installation package file, to transfer the installation package file to the PMS service. It may be understood that, in embodiments of this application, "copy", "duplicate", and "write" have a same concept, and may be used interchangeably. The following uses "copy" for description.

S103: The electronic device invokes the PMS service by using the PIS service to start an application installation process.

S104: The electronic device invokes the PMS service to extract the installation package file from the temporary data folder transmitted by using the PackageInstallerSession and write the installation package file into the installation folder of the application for installing the application.

In the method for installing the application on the electronic device, because the PMS service runs in a system service (SystemServer) process, and the application market module runs in a process of the application market module, the two processes are independent of each other. Therefore, the PMS service does not have permission to access the data folder of the application market module, and cannot directly obtain the downloaded installation package file by using the data folder of the application market module. Instead, the PMS service needs to obtain the installation package file by using the PackageInstallerSession. Specifically, it can be learned from step S102 that the installation package file is stored in the temporary folder transmitted by using the PackageInstallerSession, and the installation package file is obtained by copying that in the data folder of the application market module. It can be learned that, in a process of installing the application, the installation package file may be copied by the electronic device for a plurality of times, for example, first copied from the data folder of the application market module to the PackageInstallerSession, and then copied from the PackageInstallerSession to the installation folder of the application.

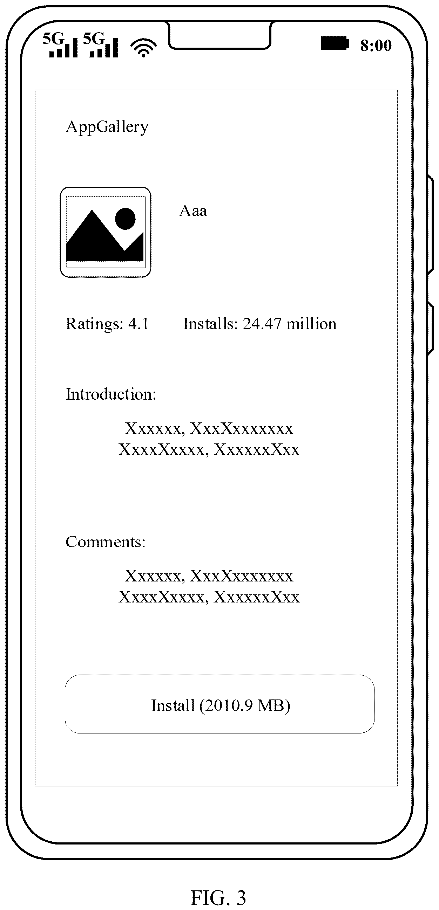

In some application scenarios, to continuously enrich use functions and experience of an application, developers of the application may continuously add a plurality of new functions, features, and the like to the application. As a result, a data amount of an installation package file of the application is increasingly large. FIG. 3 is a diagram of an application download interface in an application market according to an embodiment of this application. FIG. 3 is a download interface of an application "Aaa". It can be learned based on content displayed on the download interface that, a data amount of an installation package file of the application "Aaa" is 2010.9 megabytes (Mbyte, MB), which is close to 2 gigabytes (Gigabyte, GB).

The electronic device needs to copy the installation package file of the application for a plurality of times in a process of installing the application. In this case, when the data amount of the installation package file of the application is relatively large, and/or a file read/write (which may also be referred to as copy or duplicate) rate of the electronic device is relatively low, time for installing the application on the electronic device is relatively long. As a result, user experience is affected.

To resolve the problem in which the time for installing the application on the electronic device is relatively long because the electronic device needs to copy the installation package file of the application for the plurality of times in the process of installing the application on the electronic device, an embodiment of this application provides an application installation method. The method includes: An installation package file of an application is downloaded into a shared folder in advance. An electronic device receives an installation request of a user for installing the application. In response to the installation request, the electronic device obtains an address of the shared folder indicating the shared folder that stores the installation package file of the application, obtains the shared folder based on the address of the shared folder, and may install the application based on the installation package file in the shared folder. In this way, the electronic device can obtain, based on the address of the shared folder, the installation package file stored in the shared folder. In the process of installing the application, the electronic device does not need to copy the installation package file for the plurality of times, so that a speed of installing the application can be improved, and the time for installing the application can be reduced. Therefore, user experience is improved.

It may be understood that the data folder, the shared folder, and the installation folder are example names. For example, the names may be replaced with names such as a data directory, a shared directory, and an installation directory. The data directory may be understood as a folder corresponding to the data directory, the shared directory may be understood as a folder corresponding to the shared directory, and the installation directory may be understood as a folder corresponding to the installation directory. This is not limited in embodiments of this application. In the following solutions in embodiments of this application, the data folder, the shared folder, and the installation folder are used as an example for description. This is uniformly described herein, and details are not described below again.

The electronic device in the foregoing embodiment may include but is not limited to a smartphone, a netbook, a tablet computer, a smartwatch, a smart band, a phone watch, a smart camera, a palmtop computer, a personal computer (personal computer, PC), a personal digital assistant (personal digital assistant, PDA), a portable multimedia player (portable multimedia player, PMP), an augmented reality (augmented reality, AR)/virtual reality (virtual reality, VR) device, a television, a projection device, a somatic game console in a human-computer interaction scenario, or the like. Alternatively, the electronic device may be an electronic device of another type or structure. This is not limited in this application.

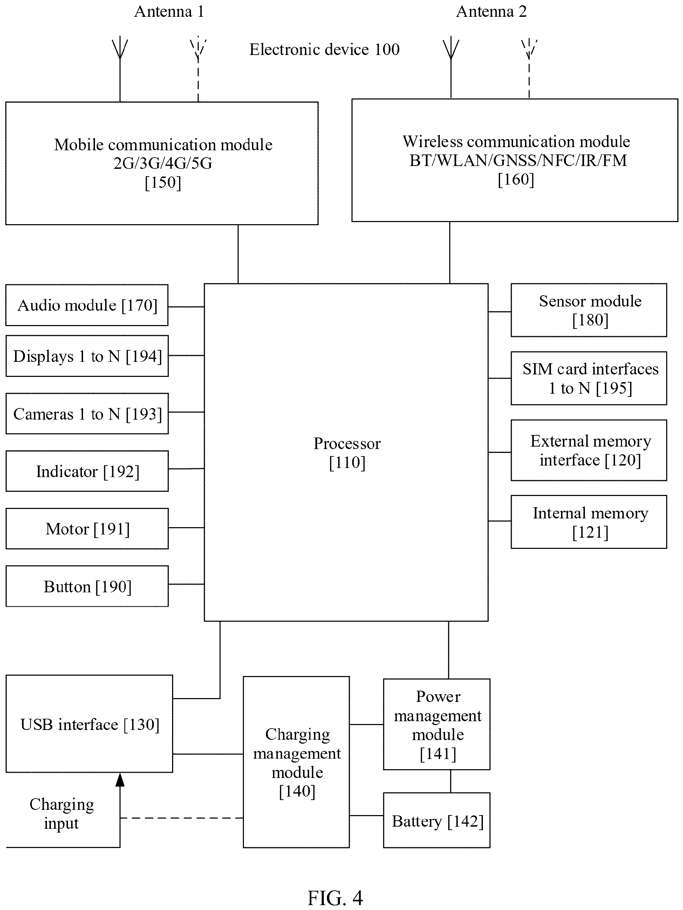

FIG. 4 is a diagram of a hardware structure of an electronic device 100. For example, the electronic device 100 shown in FIG. 4 may be user equipment in embodiments of this application.

As shown in FIG. 4, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identity module (subscriber identity module, SIM) card interface 195, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that has been recently used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as the I2C interface, the I2S interface, the UART interface, the MIPI interface, or the like.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and the peripheral device, or may be configured to connect to a headset for playing audio through the headset. The interface may be further configured to connect to another electronic device such as an AR device.

It may be understood that an interface connection relationship between the modules shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The electronic device 100 may implement a display function through the GPU, the display 194, the application processor, and the like. The GPU is a microprocessor for image processing, and is connected to the display 194 and the application processor. The GPU is configured to: perform mathematical and geometric computation and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The external memory interface 120 may be configured to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required for at least one function (for example, a sound playing function or an image playing function), and the like. The data storage area may store data (for example, audio data or an address book) and the like created when the electronic device 100 is used. In addition, the internal memory 121 may include a high-speed random access memory, or may include a non-volatile memory, for example, at least one magnetic disk storage device, a flash memory, or a universal flash storage (universal flash storage, UFS).

A software system of the electronic device 100 may use a layered architecture, an event-driven architecture, a microkernel architecture, a micro service architecture, or a cloud architecture. In this embodiment of the present invention, an Android system of a layered architecture is used as an example to illustrate a software structure of the electronic device 100.

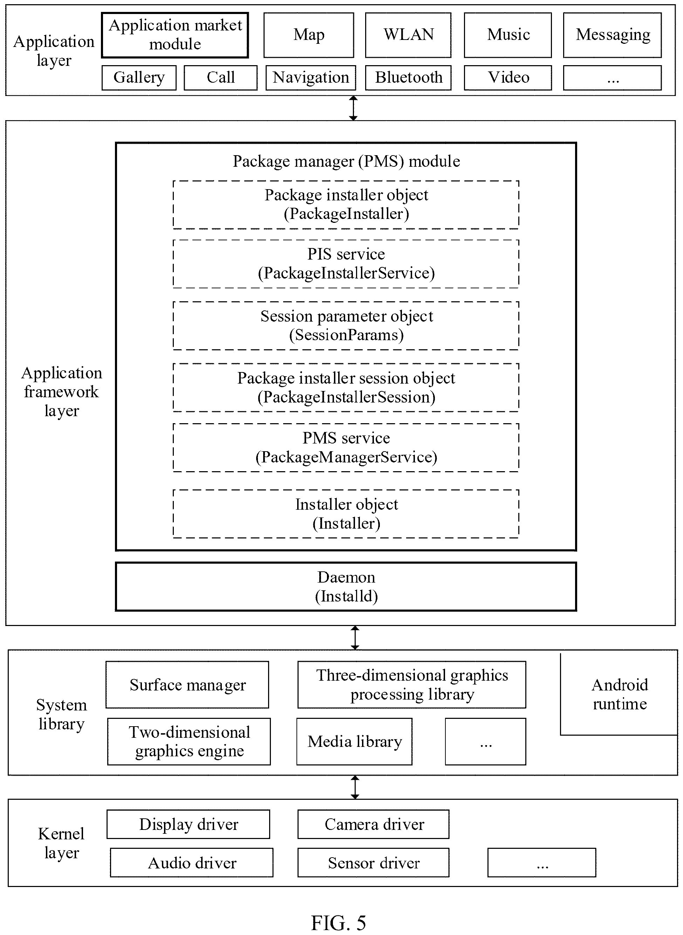

FIG. 5 is a block diagram of a software structure of an electronic device 100 according to an embodiment of the present invention.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages. As shown in FIG. 5, the application packages may include applications such as an application market module, Gallery, Calendar, Call, Map, Navigation, WLAN, Bluetooth, Music, Video, and Messaging.

In this embodiment of this application, the application market module is configured to manage an application, for example, including downloading, installing, and uninstalling the application. In this embodiment of this application, the application market module is configured to: download an installation package file of the application, and store the installation package file in a shared folder. It may be understood that the application market module is an example name. A name of the application market module is not limited in embodiments of this application. For example, the application market module may be replaced with a name that has a same or similar function, such as an installation and download module or an application mall module. In the following solutions in embodiments of this application, the application market module is uniformly used as an example for description.

As shown in FIG. 5, the application framework layer provides an application programming interface (application programming interface, API) and a programming framework for the application at the application layer. The application framework layer includes some predefined functions.

In this embodiment of this application, the application framework layer includes a package manager (PMS) module and a daemon (Installd). The PMS module includes a package installer object (PackageInstaller), a PIS service, a PMS service, a session parameter object (SessionParams), a package installer session object (PackageInstallerSession), and an installer object (Installer). The PackageInstaller is a proxy object of the PIS service. The PIS service may be configured to create the PackageInstallerSession. The PackageInstallerSession may be used to transfer an address of the shared folder. Specifically, the PackageInstallerSession includes the SessionParams object, and the SessionParams object includes the address of the shared folder. The PMS service may be configured to: extract the address of the shared folder by using the SessionParams object, and install the application based on the installation package file in the shared folder corresponding to the address. The Installd process is configured to: create, rename, and delete folders for the PMS service installation system through the Installer. The Android runtime includes a kernel library and a virtual machine. The Android runtime is responsible for scheduling and management of an Android system.

The kernel library includes two parts: a function that needs to be invoked in Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

A software framework of the electronic device shown in FIG. 5 is used as an example. A principle of an application installation method provided in this embodiment of this application is as follows: The electronic device invokes the application market module to download the installation package file (.apk file) of the application and store the installation package file (.apk file) in the shared folder. After the installation package file is downloaded, the electronic device invokes the application market module to construct the SessionParams object. The SessionParams object is used to configure various parameters of the PackageInstallerSession. The electronic device invokes the PIS service through the application market module to create the PackageInstallerSession based on the SessionParams. The electronic device invokes a commit interface of the PackageInstaller through the application market module to submit an installation request to the PIS service. After receiving the installation request, the PIS service parses the SessionParams from the PackageInstallerSession and completes installation process initialization. The SessionParams includes the address of the shared folder and completes installation process initialization. Finally, the electronic device invokes an install interface of the PMS service by using the PIS service to start the installation. The PMS service obtains the shared folder based on the address of the shared folder and installs the application based on the installation package file in the shared folder.

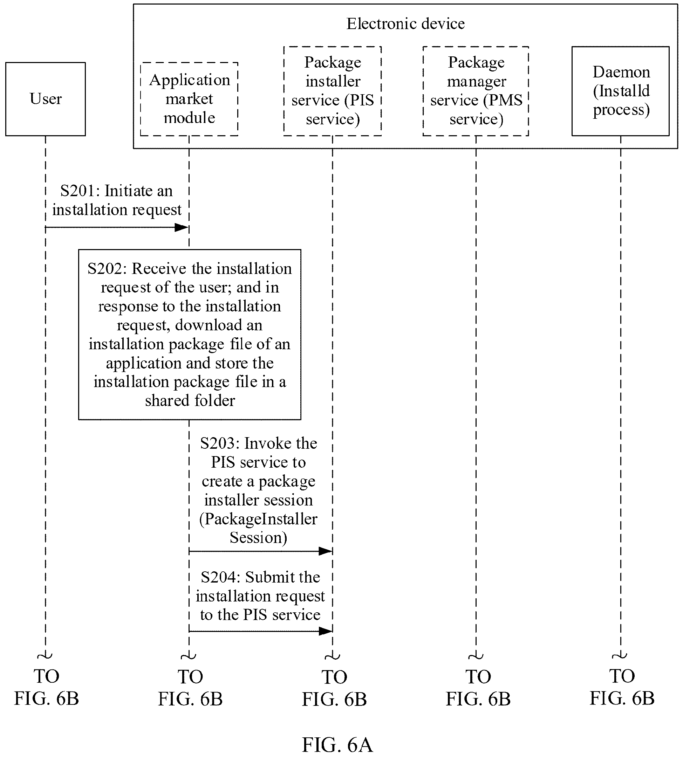

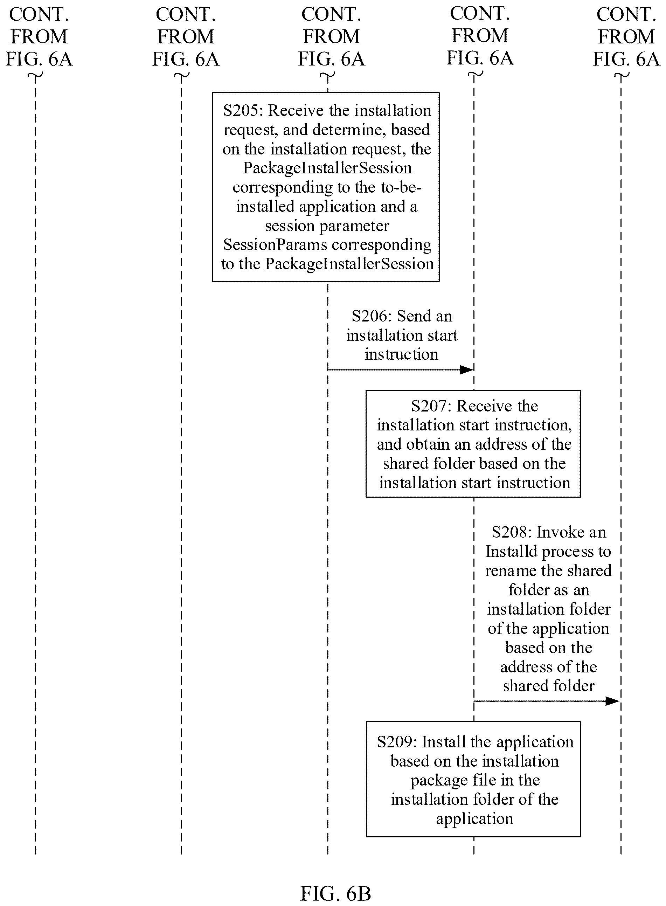

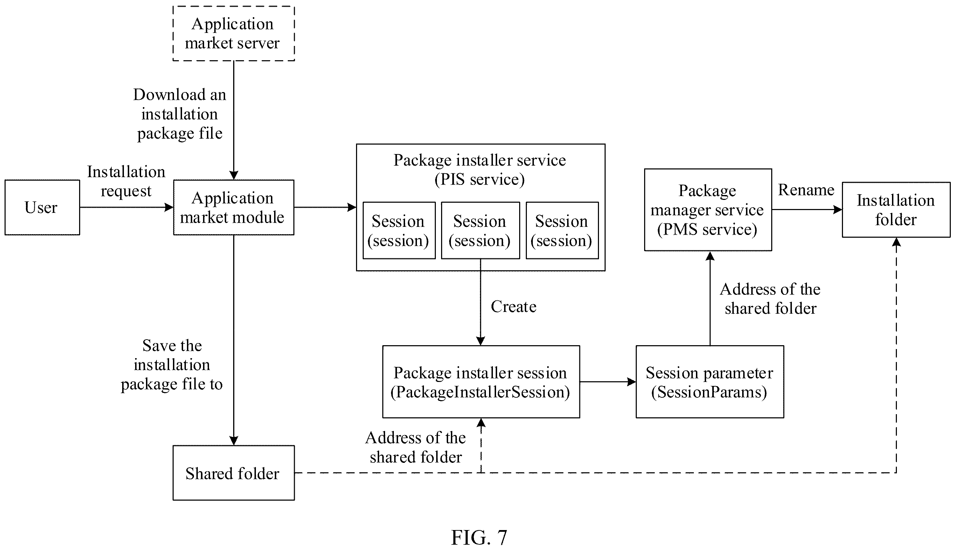

The following describes an application installation method provided in embodiments of this application. For the following electronic device, specifically refer to the components shown in FIG. 4 and the application framework layer shown in FIG. 5. FIG. 6A and FIG. 6B are schematic flowcharts of an application installation method according to an embodiment of this application. FIG. 7 is a principle diagram of an application installation method according to an embodiment of this application. With reference to FIG. 6A, FIG. 6B, and FIG. 7, the method may include the following steps S201 to S209.

S201: A user initiates an installation request to an electronic device.

In this embodiment of this application, the user may initiate the installation request to the electronic device by using an application (application, APP) that has a download and installation function on the electronic device. In an example, the user initiates the installation request by using an AppGallery APP. The AppGallery APP may be installed on user equipment, and is displayed to the user in a form of an AppGallery APP icon. The user may tap the AppGallery APP icon to open the AppGallery APP, and may initiate the installation request by using an installation control on a display interface of the AppGallery APP.

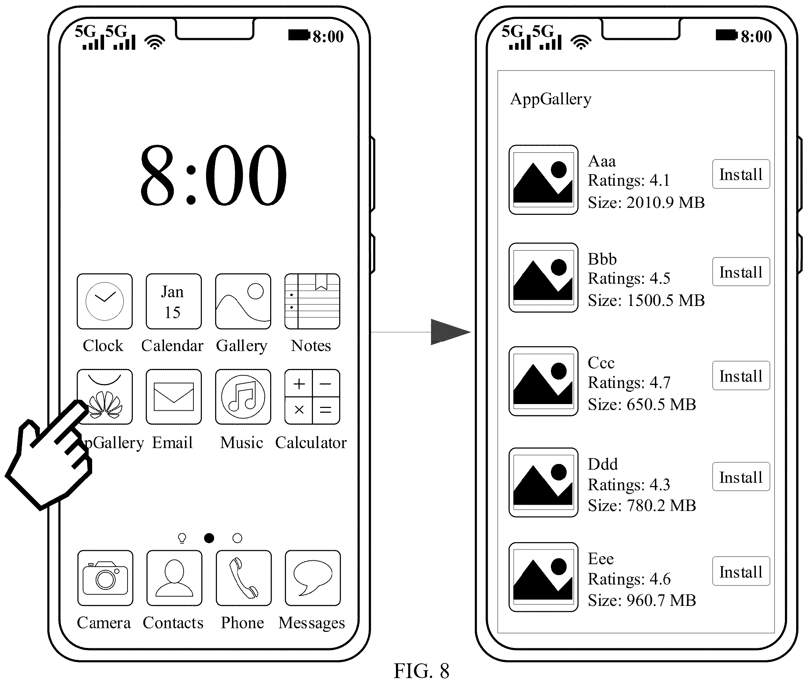

For example, as shown in FIG. 8, the user may tap the AppGallery APP icon on the user equipment, to open the AppGallery APP. The AppGallery APP may provide download and installation services for a plurality of applications. Each application may be displayed to the user in a form of icon, and a name, ratings, a data amount of an installation package file, and the like of the application are displayed. The user may tap an installation control corresponding to the application, to initiate an installation request for installing the APP to the electronic device.

In some embodiments, the installation request includes at least identification information of the to-be-installed application. The identification information of the to-be-installed application is used to identify the application, for example, a name of the application. In this way, it is ensured that the electronic device can accurately install the application selected by the user.

Optionally, the installation request further includes information about an installation requester. The information about the installation requester may be used to configure a PackageInstallerSession. Specifically, the information about the installation requester represents information about the electronic device, for example, including a name and a system of the electronic device.

S202: The electronic device receives the installation request of the user; and in response to the installation request, downloads an installation package file of the application and stores the installation package file in a shared folder.

In an implementation, step S202 may be implemented by using an application market module on the electronic device.

Specifically, as shown in FIG. 7, the application market module receives and responds to the installation request of the user, and may download the installation package file of the application from an application server. In an example, the application server stores an installation package file of a specified application, and may provide a download service for the application market module. In another example, the application server integrates installation package files of a plurality of applications, and the application market module may send a download request including identification information of the application to the application server, to download and obtain, from the application server, the installation package file of the application corresponding to the identification information of the application.

The installation package file may be an Android application package (Android application package, APK) file. After completing development of an Android application, a developer may compile and package program code and a resource file together into a file that can be installed and used by an Android system, that is, the APK file. An APK file usually includes a compiled code file (.dex file), file resources (resources), a native resource file (assets), a certificate (certificates), a configuration manifest file (manifest file), and the like. The electronic device may install, by parsing the file in the APK file, an application corresponding to the APK file.

In this embodiment of this application, the application market module stores the downloaded installation package file in the shared folder. The shared folder is created by the application market module. For example, the application market module may create the shared folder in a local file system of the electronic device. In some embodiments, the application market module may further configure read/write permission for the shared folder. For example, the application market module configures an object with the read/write permission for the shared folder as, including but not limited to, the application market module and a PMS service, to help the PMS service obtain the installation package file by using the shared folder. It may be understood that a service, a module, or the like having a same function as the PMS service also has the read/write permission for the shared folder.

S203: The electronic device invokes a PIS service to create the PackageInstallerSession.

The PackageInstallerSession (or briefly referred to as a session) corresponds to the to-be-installed application (that is, the application downloaded in S202), and the PackageInstallerSession is used to transfer/transmit a session parameter (SessionParams) corresponding to the PackageInstallerSession between the PIS service and the PMS service. It may be understood that creating the PackageInstallerSession in this application may mean configuring a related parameter of the PackageInstallerSession, for example, configuring an application, the SessionParams, a session identifier (session ID), or the like corresponding to the PackageInstallerSession, packaging the configured related parameter into a file (where the file may be referred to as a configuration file), and storing the file with the corresponding PackageInstallerSession.

In an implementation, the electronic device may invoke, through the application market module, a session creation (CreateSession) interface of the PIS service to create the PackageInstallerSession.

Specifically, after the application market module downloads the application and stores the application in the shared folder, an application module may construct/configure, based on the installation request of the user, information about the installation package file, and the like, a session parameter (SessionParams) object (hereinafter briefly referred to as SessionParams) corresponding to the application, to configure various parameters for installing the application. Further, after the construction/configuration is completed, the application market module invokes the CreateSession interface of the PIS service, for example, sends a session creation request carrying the SessionParams to the PIS service through the CreateSession interface. The session creation request is used to request to create the PackageInstallerSession corresponding to the application. After receiving the session creation request, the PIS service determines, based on the session creation request, to create the session for the application, obtains the SessionParams from the session creation request, and creates the PackageInstallerSession corresponding to the application based on the SessionParams.

Further, after the PIS service completes creating the PackageInstallerSession, the PIS service may return a session creation response to the application market module. The session creation response may carry the identification information of the to-be-installed application, and the session creation response indicates that creation of the PackageInstallerSession of the to-be-installed application is completed.

In this application, the information about the installation package file may include but is not limited to a name of the installation package file, a download source of the installation package file, and an installation mode of the installation package file (overwrite installation or new installation). The SessionParams may include but is not limited to the information about the installation requester, the name of the installation package file, the download source of the installation package file, the installation mode of the installation package file, and the like. The information about the installation requester represents the information about the electronic device, for example, including the name and the system of the electronic device. The name of the installation package file is a name of the installed application. The download source of the installation package file is a source of the installation package file downloaded by the application market module. For example, the download source may be an application market server. The installation mode of the installation package file is used to describe a manner of installing the installation package file. For example, the installation mode includes overwrite installation or new installation.

In this embodiment of this application, to transfer the installation package file in the shared folder, the SessionParams constructed by the application market module includes an address of the shared folder. The address of the shared folder indicates the shared folder. For example, the address of the shared folder may be /data/misc/installer/XXXXXXX/0/com.xxxxxx.appmarket. Therefore, the PackageInstallerSession created based on the SessionParams includes the address of the shared folder. In this way, the address of the shared folder can be transferred to the PMS service by using the PackageInstallerSession, the shared folder can be determined based on the address of the shared folder, and further, the installation package file in the shared folder can be obtained.

It may be understood that, in a scenario in which a plurality of applications are downloaded and installed, the PIS service may create a plurality of PackageInstallerSessions corresponding to the plurality of applications, and one application corresponds to one PackageInstallerSession.

S204: The electronic device submits the installation request to the PIS service.

The installation request may be used to request to install the application (that is, the application downloaded in S202).

In an implementation, the electronic device may submit the installation request to the PIS service through the application market module.

Specifically, after receiving the session creation response returned by the PIS service, the application market module determines, based on the session creation response, that the creation of the PackageInstallerSession of the application is completed, and then the application market module submits the installation request to the PIS service. For example, the application market module invokes a commit (commit) interface of an application installer (PackageInstaller) to submit the installation request to the PIS service. The PackageInstaller is a proxy object of the PIS service. A service capability of the PIS service is encapsulated in the PackageInstaller. The commit interface is a commit interface provided by the PackageInstaller, and may be used to receive the installation request sent by the application market module.

S205: The PIS service receives the installation request, and determines, based on the installation request, the PackageInstallerSession corresponding to the to-be-installed application and the SessionParams corresponding to the PackageInstallerSession.

In this embodiment of this application, after the commit interface of the PackageInstaller receives the installation request, in other words, after the PIS service receives the installation request of the application market module, the PIS service may determine, based on the installation request, that the application needs to be installed, find the PackageInstallerSession corresponding to the application among the created PackageInstallerSessions, parse the configuration file of the PackageInstallerSession, obtain the SessionParams from the configuration file of the PackageInstallerSession, and initialize an installation process of the application based on the SessionParams, to be specific, configure and orchestrate the installation process of the application based on a parameter in the SessionParams. For example, if the parameter in the SessionParams includes that the installation mode of the installation package file is the overwrite installation, the PIS service configures the installation process of the application as a process of the overwrite installation.

In this case, the electronic device completes related configuration (for example, the SessionParams and the PackageInstallerSession) in the installation process of the application, and an initialization stage of the installation process of the application ends.

S206: The electronic device invokes the PIS service to send an installation start instruction to the PMS service by using the PackageInstallerSession. The installation start instruction instructs the PMS service to install the application, the installation start instruction carries the SessionParams, and the SessionParams includes the address of the shared folder.

In this embodiment of this application, the electronic device may invoke an install (install) interface of the PMS service by using the PIS service, so that the PMS service starts the installation process of the application. For example, the PIS service may directly send the installation start instruction to the install interface of the PMS service. The installation start instruction may instruct the PMS service to install the application. The installation start instruction may carry the SessionParams, and may further carry the identification information of the application, for example, the name of the application. After receiving the installation start instruction through the install interface, the PMS service starts to install the application and enters a formal installation stage (InstallStage).

It may be understood that the SessionParams may be carried in the installation start instruction; or may not be carried in the installation start instruction, but is carried in a same data packet as the installation start instruction and transmitted to the PMS service. This is not limited. This application is described by using an example in which the SessionParams is carried in the installation start instruction.

S207: The PMS service receives the installation start instruction, and obtains the address of the shared folder based on the installation start instruction.

In this embodiment of this application, the PMS service receives the installation start instruction, and starts, in response to the installation start instruction, to install the application. The PMS service first obtains the SessionParams from the installation start instruction, and extracts the address of the shared folder from the SessionParams. Because the application market module writes the address of the shared folder when constructing the SessionParams, the SessionParams includes the address of the shared folder, and the PMS service can extract the address of the shared folder from the SessionParams, to further install the application based on the installation package file in the shared folder.

S208: The PMS service renames the shared folder as an installation folder of the application based on the address of the shared folder.

In this embodiment of this application, according to a service protocol of the PMS service, in the application installation process, the PMS service needs to parse the installation package file from the installation folder of the application. Therefore, the PMS needs to find the corresponding shared folder based on the address of the shared folder, and rename the shared folder as the installation folder of the application, to help the PMS service successfully complete the installation process of the application. For example, an address of the installation folder of the application may be data/app/com.xxx.xxx. com.xxx.xxx indicates the name of the installation package file of the application (briefly referred to as a package name).

In some embodiments, in step S208, the PMS service may invoke an Installd process to rename the shared folder as the installation folder of the application. Specifically, the PMS service cannot directly rename the shared folder, but the Installd process has permission (root_UID) to rename a file, and the Installd process may provide, by using an installer (Installer) object, the PMS service with an interface for renaming. Therefore, the PMS service can invoke the Installd process to rename the shared folder. For example, the PMS service may invoke the renaming interface of the Installd process by using the Installer object, to rename the shared folder as the installation folder of the application.

S209: The PMS service installs the application based on the installation package file in the installation folder of the application.

In this embodiment of this application, because the PMS service has the read/write permission for the shared folder, the PMS service also has the read/write permission for the installation folder obtained through renaming of the shared folder. The PMS service may directly access the installation folder for data reading/writing, to parse the installation package file in the installation folder, so that application installation is implemented.

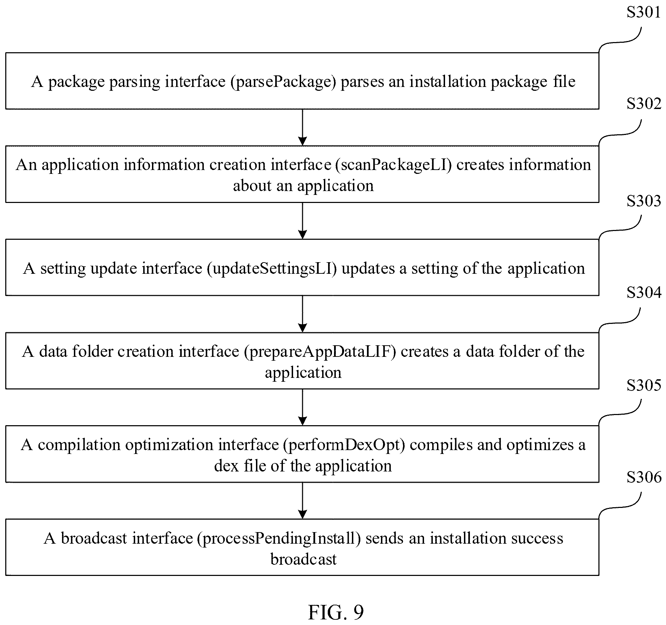

The following uses an example in which a PMS service implements application installation through a package parsing interface (parsePackage), an application information creation interface (scanPackageLI), a setting update interface (updateSettingsLI), a data folder creation interface (prepareAppDataLIF), a compilation optimization interface (performDexOpt), and a broadcast interface (processPendingInstall), to describe a method for installing an application by the PMS service. As shown in FIG. 9, the method specifically includes steps S301 to S306.

S301: The parsePackage parses an installation package file.

Specifically, an example in which the installation package file is an APK file is used. The APK file is a compressed package file. The parsePackage may extract, by decompressing the APK file, a configuration manifest file (manifest file) in the APK file. For example, the parsePackage decompresses the APK file, extracts an Androidmanifest.xml file, and parses the file. The Androidmanifest.xml file includes a configuration manifest of an application, for example, a name and an icon of the application, information about an application interface, and information about a service. Further, the parsePackage may further verify a verification signature in the Androidmanifest.xml file to determine validity of installation of the application. If the installation is valid, then proceed to a subsequent installation process.

S302: The scanPackageLI creates information about the application.

Specifically, the scanPackageLI may create, based on the Androidmanifest.xml file parsed and extracted in step S301, initial information (simplified information) of the application, for example, including a package name of the application and an installation directory. The initial information of the application is stored in a memory of an electronic device, to be further written into a system file.

S303: The updateSettingsLI updates a setting of the application.

Specifically, the updateSettingsLI writes the initial information of the application created by the scanPackageLI in step S302 into a system file of an Android system, to update setting information of the application and the like.

S304: The prepareAppDataLIF creates a data folder of the application.

Specifically, the prepareAppDataLIF creates the data folder (which may also be referred to as a sandbox file) of the application in the memory of the electronic device, to store data generated in a process of using the application. Only the installed application has read/write permission for the data folder. For example, the prepareAppDataLIF may invoke an Installd process creation interface to create the data folder of the application.

S305: The performDexOpt compiles and optimizes a dex file of the application.

Specifically, the application runs in a virtual machine of the system, and the performDexOpt compiles and optimizes a common interface (hotspot interface) of the application by using a virtual machine technology. In this way, the application can be started quickly.

S306: The processPendingInstall sends an installation success broadcast.

Specifically, after the application is installed, the processPendingInstall sends the installation success broadcast to notify that the application is successfully installed. For example, a desktop of the electronic device may listen to the broadcast. After the desktop receives the installation success broadcast sent by the processPendingInstall, the icon of the application may be displayed on a display interface of the desktop.

It may be understood that steps S301 to S306 are merely examples of a process of installing the application by the PMS service. Specific processes of installing the application by the PMS service are different based on different electronic devices, systems of the electronic devices, installation modes of the application, or the like. This is not specifically limited in this application.

In some embodiments, eight different applications are installed on the electronic device by using the application installation method shown in steps S201 to S209 and the application installation method shown in steps S101 to S104 in embodiments of this application separately. Table 1 shows a performance benefit of installing the application provided in this embodiment of this application. As shown in Table 1, eight groups of data are obtained in total, and each group of data includes a package name of the application, a data amount of an installation package file, and an installation performance benefit. The installation performance benefit is a reduced installation time for installing the application by using the application installation method shown in steps S201 to S209 in this embodiment of this application compared with the application installation method shown in steps S101 to S104.

**Table 1**

| Application package name | Data amount of an installation package file (M) | Installation performance benefit (ms) |
|---|---|---|
| cn.xxx.xxx1 | 83 | 288.5 |
| com.xxx.xxx2 | 60.7 | 608 |
| com.xxx.xxx3 | 103.2 | 1019 |
| com.xxx.xxx4 | 183.4 | 1700 |
| com.xxx.xxx5 | 410.6 | 3566 |
| com.xxx.xxx6 | 1065.5 | 9026 |
| com.xxx.xxx7 | 1542.7 | 13349 |
| com.xxx.xxx8 | 1948.7 | 19023.5 |

It can be learned from the data in Table 1 that the process of installing the application by using the application installation method provided in this embodiment of this application consumes short time. This can improve a speed of installing the application by the electronic device. A larger data amount of the installation package file indicates a higher application installation performance benefit, that is, more reduced installation time.

The foregoing mainly describes the solutions provided in embodiments of this application from a perspective of interaction between nodes. It may be understood that, to implement the foregoing functions, each node, such as the electronic device, includes a corresponding hardware structure and/or software module for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the electronic device may be grouped into functional modules based on the foregoing method examples. For example, each functional module may be obtained through grouping based on each corresponding function, or two or more functions may be integrated into one processing module. The integrated module may be implemented in a form of hardware, or may be implemented in a form of software functional module. It should be noted that, in embodiments of this application, module grouping is an example and is merely logical function grouping. During actual implementation, there may be another grouping manner.

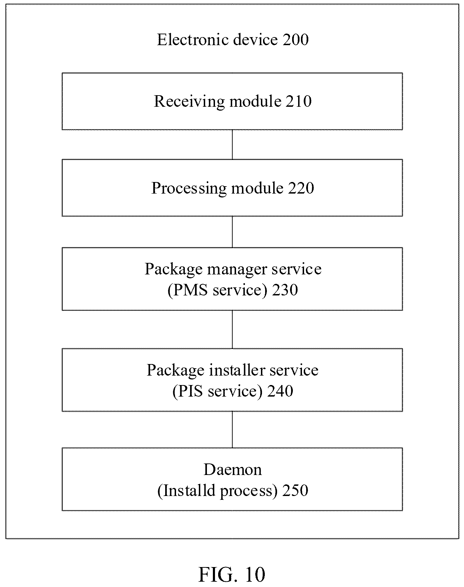

FIG. 10 is a diagram of a structure of an electronic device according to an embodiment of this application. An electronic device 200 may be configured to perform functions of the electronic device in the foregoing embodiments.

An embodiment of this application further provides an electronic device, including a receiving module 210 and a processing module 220. The receiving module 210 is configured to receive an installation request of a user. The installation request is used to request to install an application. An installation package file of the application is downloaded and stored in a shared folder. The shared folder supports access by an installation apparatus with read/write permission. The processing module 220 is configured to: in response to the installation request, obtain an address of the shared folder corresponding to the application. The address of the shared folder indicates the shared folder in which the installation package file of the application is located. The processing module 220 is further configured to: obtain the shared folder based on the address of the shared folder and install the application based on the installation package file in the shared folder. In this way, the electronic device 200 can obtain, based on the address of the shared folder, the installation package file stored in the shared folder. In a process of installing the application, the electronic device does not need to copy the installation package file for a plurality of times, so that a speed of installing the application can be improved, and time for installing the application can be reduced. Therefore, user experience is improved.

It may be understood that the electronic device 200 may further include components shown in FIG. 4. In this case, a receiving action of the receiving module 210 on the electronic device 200 may be performed by the components such as the antenna 1, the antenna 2, the mobile communication module 150, and the wireless communication module 160 in FIG. 4, and a specific processing action of the processing module 220 may be performed by the processor 110 in FIG. 4.

In some embodiments, the electronic device further includes a package manager service PMS service 230. The processing module 220 may be further configured to invoke the PMS service 230 to obtain an address of a shared file corresponding to the application.

In some embodiments, the electronic device further includes a package installer service PIS service 240. The processing module 220 may be further configured to invoke the PIS service 240 to create a package installer session PackageInstallerSession. The PackageInstallerSession includes the address of the shared folder.

In some embodiments, the processing module 220 is further configured to: invoke the PIS service 240 to parse the PackageInstallerSession to obtain a session parameter SessionParams, where the SessionParams includes the address of the shared folder; and invoke the PMS service 230 by using the PIS service 240 to extract the address of the shared folder from the SessionParams.

In some embodiments, the processing module 220 is further configured to: invoke an Installd process 250 to rename the shared file as an installation folder of the application, and further invoke the PMS service 230 to install the application by using the installation package file in the installation folder.

An embodiment of this application further provides an electronic device. The electronic device may include one or more processors, a memory, and a communication interface. The memory and the communication interface are coupled to the processor. For example, the memory, the communication interface, and the processor may be coupled together through a bus.

The communication interface is configured to perform data transmission with another device. The memory stores computer program code. The computer program code includes computer instructions. When the computer instructions are executed by the processor, the electronic device is enabled to perform related steps of the application installation method in the foregoing method embodiment.

It may be understood that the electronic device may further include the components shown in FIG. 4. For example, the processor may be the processor 110 in FIG. 4, the memory may be the internal memory 121 or an external memory connected through the external memory interface 120 in FIG. 4, and the communication interface may be the USB interface in FIG. 4.

An embodiment of this application further provides a computer-readable storage medium, including computer instructions. When the computer instructions are run on an electronic device, the electronic device is enabled to perform related steps of the application installation method in the foregoing method embodiment.

An embodiment of this application further provides a computer program product. When the computer program product runs on a computer, the computer is enabled to perform related steps of the application installation method in the foregoing method embodiment.

The electronic device, the computer storage medium, and the computer program product provided in this application each are configured to perform the corresponding method provided above. Therefore, for beneficial effects that can be achieved by the electronic device, the computer storage medium, and the computer program product, refer to the beneficial effects in the corresponding methods provided above. Details are not described herein again.

Based on the foregoing descriptions of the implementations, a person skilled in the art can clearly understand that, for the purpose of convenient and brief description, division into the foregoing functional modules is used as an example for illustration. During actual application, the foregoing functions can be allocated to different functional modules and implemented as required, that is, an inner structure of an apparatus is divided into different functional modules to implement all or some of the functions described above.

In the several embodiments provided in this application, it should be understood that the disclosed apparatus and method may be implemented in another manner. For example, the described apparatus embodiments are merely examples. For example, the division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between apparatuses or units may be implemented in electronic, mechanical, or another form.

The units described as separate parts may or may not be physically separate, and parts displayed as units may be one or more physical units, may be located in one place, or may be distributed on different places. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of software functional unit.

When the integrated unit is implemented in the form of software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in the form of software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An application installation method, wherein the method comprises:
receiving an installation request of a user, wherein the installation request is used to request to install an application;
in response to the installation request, downloading an installation package file of the application and storing the installation package file of the application in a shared folder, wherein the shared folder supports access by a package manager service PMS service with read/write permission; and
invoking the PMS service to obtain an address of the shared folder corresponding to the application, obtaining the shared folder based on the address of the shared folder, and installing the application based on the installation package file in the shared folder, wherein the address of the shared folder indicates the shared folder in which the installation package file of the application is located.

2. The method according to claim 1, wherein the invoking the PMS service to obtain an address of the shared folder corresponding to the application comprises:
invoking the PMS service, and obtaining a session parameter SessionParams from a package installer service PIS service by using a package installer session PackageInstallerSession corresponding to the application, wherein the SessionParams comprises the address of the shared folder.

3. The method according to claim 2, wherein the method further comprises:
invoking the PIS service to create the PackageInstallerSession, wherein the PackageInstallerSession is used to transmit the session parameter SessionParams corresponding to the application.

4. The method according to claim 3, wherein the invoking the package installer service PIS service to create the PackageInstallerSession comprises:
invoking the PIS service to obtain the session parameter SessionParams corresponding to the application; and
creating the PackageInstallerSession based on the session parameter SessionParams.

5. The method according to any one of claims 1 to 4, wherein a method for the installing the application based on the installation package file in the shared folder comprises:
invoking an installation daemon Installd to rename the shared file as an installation folder of the application; and
invoking the PMS service to install the application by using the installation package file in the installation folder.

6. An electronic device, comprising:
a receiving module, configured to receive an installation request of a user, wherein the installation request is used to request to install an application; and
a processing module, configured to: in response to the installation request, download an installation package file of the application and store the installation package file of the application in a shared folder, wherein the shared folder supports access by a package manager service PMS service with read/write permission, wherein
the processing module is further configured to: invoke the PMS service to obtain an address of the shared folder corresponding to the application, obtain the shared folder based on the address of the shared folder, and install the application based on the installation package file in the shared folder, wherein the address of the shared folder indicates the shared folder in which the installation package file of the application is located.

7. The electronic device according to claim 6, wherein
the processing module is specifically configured to: invoke the PMS service, and obtain a session parameter SessionParams from a package installer service PIS service by using a package installer session PackageInstallerSession corresponding to the application, wherein the SessionParams comprises the address of the shared folder.

8. The electronic device according to claim 7, wherein
the processing module is further configured to invoke the PIS service to create the PackageInstallerSession, wherein the PackageInstallerSession is used to transmit the session parameter SessionParams corresponding to the application.

9. The electronic device according to claim 8, wherein
the processing module is specifically configured to: invoke the PIS service to obtain the session parameter SessionParams corresponding to the application and create the PackageInstallerSession based on the session parameter SessionParams.

10. The electronic device according to any one of claims 6 to 9, wherein
the processing module is further configured to: invoke an Installd process to rename the shared file as an installation folder of the application; and
the processing module is further configured to invoke the PMS service to install the application by using the installation package file in the installation folder.

11. An electronic device, comprising a memory and one or more processors, wherein the memory is coupled to the processor, the memory stores computer program code, the computer program code comprises computer instructions, and when the computer instructions are executed by the processor, the electronic device is enabled to perform the method according to any one of claims 1 to 5.

12. A computer-readable storage medium, comprising computer instructions, wherein when the computer instructions are run on an electronic device, the electronic device is enabled to perform the method according to any one of claims 1 to 5.

13. A computer program product, wherein when the computer program product runs on a computer, the electronic device is enabled to perform the method according to any one of claims 1 to 5.
